# EUROPEAN PATENT APPLICATION

(11) **EP 2 552 107 A2**
(43) Date of publication of application: **30.01.2013**
(21) Application number: 12151890.6
(22) Date of filing: 20.01.2012
(51) Int. Cl.: H04N 5/44, H04N 21/4782, H04N 21/426

(54) **Internet protocol television**

(30) Priority: 26.07.2011 TW 100126520
(71) Applicant: HannStar Display Corp., Wugu Dist. New Taipei City 248 (TW)
(72) Inventor: Bai, Yi-Ming, 508 Changhua County (TW)
(74) Representative: Michalski Hüttermann & Partner

(57) **Abstract**

The present invention provides an internet protocol television including a TV main chip, an internet module and a micro control processor. The TV main chip receives a TV signal and an internet signal, and outputs a video signal and an audio signal after processing the received TV signal and the internet signal. The internet module receives processes and outputs the internet signal. The micro control processor receives a command signal and accordingly activates the TV main chip to execute corresponding commands. The micro control processor is able to directly control the receiving, processing and outputting of the internet signal by the internet module without activating the TV main chip.

## Description

### CROSS-REFERENCE TO RELATED APPLICATION

This application claims the benefit of Taiwan Patent Application No. 100126520, filed on July 26, 2011, in the Taiwan Intellectual Property Office, the disclosure of which is incorporated herein in its entirety by reference.

### BACKGROUND OF THE INVENTION

### 1. Field of the Invention

The present invention relates to a television, in particular to the Internet protocol television capable of serving as a router or a switch of Internet signals in a power-saving mode without turning on a TV main chip.

### 2. Description of the Related Art

In general, an Internet protocol television requires a network connection as a bridge and uses the Linux OS as the core of the system to process related data on the network and transmit the related information to a video display device.

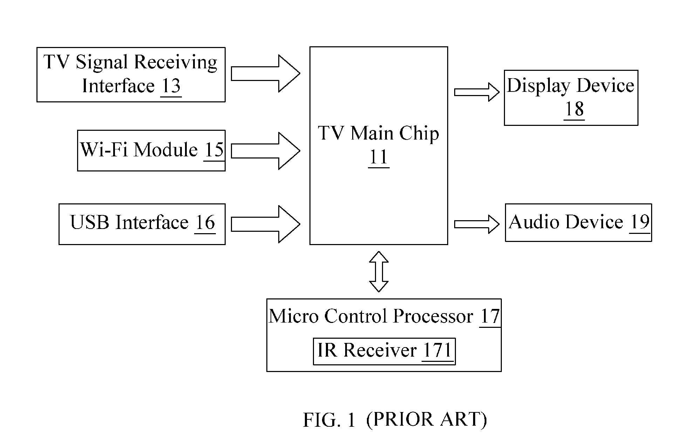

With reference to FIG. 1 for a circuit block diagram of a conventional Internet protocol television, the conventional Internet protocol television comprises a TV main chip 11, a TV signal receiving interface 13, a wireless fidelity (Wi-Fi) module 15, a universal serial bus (USB) interface 16, a micro control processor 17, a display device 18 and an audio device 19. The micro control processor 17 serves as a power management system with a main function of turning on the TV main chip 11 and receive a related infrared (IR) command through the IR receiver 171. When the TV main chip is turned on, an input signal transmitted from the TV signal receiving interface 13 can be received, processed and transmitted to a display device 18 (such as a liquid crystal display panel), and the audio is transmitted to the audio device or audio processor 19 to perform related processing and output. In addition, the TV main chip 11 communicates, transmits and processes related data with the Wi-Fi module 15 and external peripherals connected to the USB interface 16.

At present, the 3G wireless online service becomes increasingly more popular and the so-called 3G network switch has been launched in the market, such that a local area network can be built through a cable or Wi-Fi wireless method, so that several computers in the local area network can share the Internet connection. This kind of switch generally includes a Wi-Fi module and an interface connectable to an interface of the 3G USB network card.

Although the Internet protocol television also has the Wi-Fi module and USB interface, theoretically the functions of network sharing and router can be achieved by installing appropriate software. Since it is necessary to turn on the whole television system to use the related network function, therefore the Internet protocol television used as a standalone network switch or router has to consume more power and therefore not economic and environmental friendly.

### SUMMARY OF THE INVENTION

In view of the aforementioned problems, it is a primary objective of the present invention to provide an Internet protocol television, such that users are not only capable of using the Internet protocol television as a network switch or router, but also achieving the effect of saving power.

To achieve the aforementioned objective, the present invention provides an Internet protocol television comprising a TV main chip, an Internet module and a micro control processor. The TV main chip receives a TV signal and an Internet signal, and processes the TV signal or the Internet signal to output a video signal and an audio signal. The Internet module receives, processes and outputs the Internet signal. The micro control processor receives a command signal to turn on the TV main chip and drives the TV main chip to execute a related command. Wherein, the micro control processor can directly control the Internet module to receive, process and output the Internet signal without turning on the TV main chip.

Another objective of the present invention is to provide an Internet protocol television comprising a TV main chip, a wireless Internet module, a cable Internet module, an external device interface circuit and a micro control processor. The TV main chip receives a TV signal, an Internet signal and an external device signal and processes the signals to output a video signal and an audio signal. The wireless Internet module receives, processes and outputs the Internet signal. The cable Internet module receives, processes and outputs the Internet signal. The external device interface circuit receives, processes and outputs the external device signal transmitted from an external device. The micro control processor receives a command signal to turn on the TV main chip and drives the TV main chip to execute a related command. Wherein, the micro control processor can directly control the wireless Internet module, the cable Internet module and the external device interface circuit to receive, process and output the Internet signal and the external device signal without turning on the TV main chip.

### BRIEF DESCRIPTION OF THE DRAWINGS

FIG. 1 is a circuit block diagram of a conventional Internet protocol television.

FIG. 2 is a circuit block diagram of a preferred embodiment of the present invention.

FIG. 3 is a circuit block diagram of another preferred embodiment of the present invention.

### DESCRIPTION OF THE PREFERRED EMBODIMENTS

The technical characteristics and effects of the present invention will become apparent by the detailed description of preferred embodiments and related drawings as follows. For simplicity, same numerals are used to represent respective elements in the preferred embodiment and drawings.

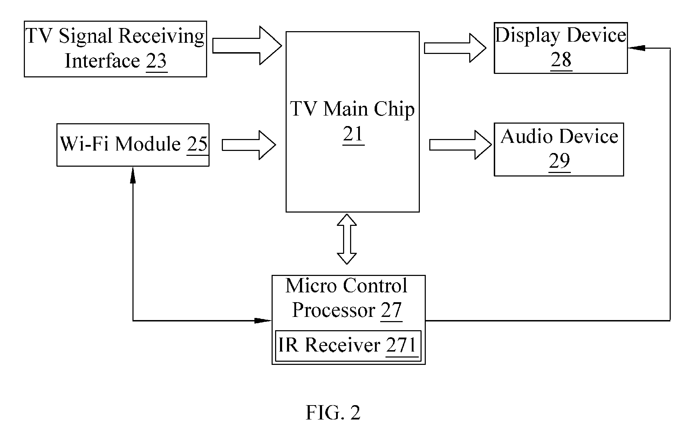

With reference to FIG. 2 for a circuit block diagram of a preferred embodiment of the present invention, the Internet protocol television comprises a TV main chip 21, a TV signal receiving interface 23, a wireless fidelity (Wi-Fi) module 25, a micro control processor 27, a display device 28 and an audio device 29. The micro control processor 27 serves as a power management system with a main function of turning on the TV main chip 21, and receiving a related infrared (IR) command by an IR receiver 271 through an IR remote controller (not shown in the figure). When the TV main chip 21 is turned on, input signals from the TV signal receiving interface 23 can be received. The input signals can be radio frequency (RF) signals, composite video blanking sync (CVBS) signals, YPbPr signals, high-definition multimedia interface (HDMI) signals or video graphics array (VGA) signals. The signals are processed and transmitted to a display device 28 (such as a liquid crystal display panel), and audio signals will be transmitted to an audio device or audio processor 29 for related processing and output. In addition, the TV main chip 21 and the Wi-Fi module 25 are provided for communicating, transmitting and processing related data.

In the Internet protocol television as shown in FIG. 2, the major difference between this Internet protocol television and the conventional Internet protocol television as shown in FIG. 1 resides on that the micro control processor 27 can directly control the Wi-Fi module 25 to receive, process and output the Internet signal without turning on the TV main chip 21. Therefore, the Internet protocol television as shown in FIG. 2 can operate the related network functions merely in the power-saving mode to execute the routing of Wi-Fi signals issued by a plurality of main computer systems to build a small local area network. In addition, when the related network function is carried out, related textual or video information can be displayed on the display device 28 by software to provide a user interface for the user's operation.

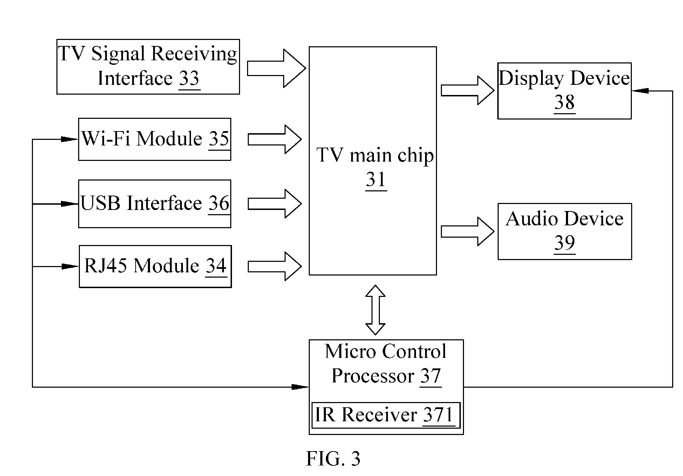

With reference to FIG. 3 for a circuit block diagram of an Internet protocol television in accordance with another preferred embodiment of the present invention, the Internet protocol television comprises a TV main chip 31, a TV signal receiving interface 33, a RJ45 module 34, a Wi-Fi module 35, a universal serial bus (USB) interface 36, a micro control processor 37, a display device 38 and an audio device 39. Wherein, the micro control processor 37 serves as a power management system, with a main function of turning on the TV main chip 31, and the IR receiver 371 receives a related IR command from an IR remote controller (not shown in the figure). When the TV main chip 31 is turned on, input signals can be received from the TV signal receiving interface 33. The input signals can be radio frequency (RF) signals, composite video blanking sync (CVBS) signals, YPbPr signals, high-definition multimedia interface (HDMI) signals or VGA signals. The signals are processed and transmitted to the display device 38 (such as a liquid crystal display panel), and audio signals will be transmitted to an audio device or audio processor 39 for related processing and output. In addition, the TV main chip 31 can communicate, transmit and process related data of an external device (such as a 3G wireless network card) connected to the RJ45 module 34, the Wi-Fi module 35 and the USB interface 36.

The major difference between the Internet protocol television as shown in FIG. 3 and the conventional Internet protocol television as shown in FIG. 1 resides on that the micro control processor 37 can directly control the Wi-Fi module 35 for receiving, processing and outputting the Internet signals without turning on the TV main chip 31, such that the Internet protocol television as shown in FIG. 3 can only operate the network related functions in the power-saving mode to execute routing Wi-Fi signals issued by several host computers to build a small local area network. In addition, the control of the RJ45 module 34 or the USB interface 36 connected to the 3G USB wireless network card can make the Wi-Fi module 35 to be a Wi-Fi router for converting the Wi-Fi signals of the cable Internet signal or 3G signal. In other words, the RJ45 module 34 or 3G USB wireless network card can be used for receiving the Internet signals, and the Wi-Fi module 35 becomes a Wi-Fi router, such that the computers in the local area network can share the Internet connection established by the cable network or 3G wireless signal. In addition, when the related functions are operated, related text or image information can be displayed on the display device 38 by software to provide a user interface for users to operate.

In summation, the present invention provides an Internet protocol television capable of using the Internet protocol television as a router or a switch for the Internet signal in a power-saving mode without turning on the TV main chip. The present invention not only provides the network related functions, but also saves the expenses of consumers to purchase the network switch or the router additionally.

## Claims

1. An Internet protocol television, comprising:
an Internet module receiving, processing and outputting an Internet signal;
a TV main chip (21) receiving a TV signal and the Internet signal, processing the TV signal or the Internet signal, and outputting a video signal and an audio signal; and
a micro control processor (27) receiving a command signal, and turning on and driving the TV main chip (21) to execute a related command;
wherein the micro control processor (27) is capable of controlling the Internet module directly to receive, process and output the Internet signal without turning on the TV main chip (21).

2. The Internet protocol television of claim 1, wherein the Internet module comprises a wireless fidelity (Wi-Fi) module (25).

3. The Internet protocol television of claim 2, wherein the micro control processor (27) controls the Wi-Fi module (25) directly to route a plurality of Wi-Fi signals without turning on the TV main chip (21).

4. The Internet protocol television of claim 1, wherein the command signal is received through an infrared transmission.

5. The Internet protocol television of claim 4, wherein the command signal is generated by an IR remote controller.

6. The Internet protocol television of claim 1, further comprising a TV signal receiving interface (23) circuit for receiving, processing and outputting the TV signal.

7. The Internet protocol television of claim 6, wherein the TV signal receiving interface (23) circuit receives and processes a radio frequency (RF) signal, a composite video blanking sync (CVBS) signal, a YPbPr signal, a high-definition multimedia interface (HDMI) signal or a video graphics array (VGA) signal.

8. The Internet protocol television of claim 1, further comprising a display device (28) for receiving the video signal from the TV main chip (21) to display an image.

9. The Internet protocol television of claim 1, further comprising an audio device (29) receives the audio signal from the TV main chip (21) to produce a sound effect.

10. An Internet protocol television, comprising:
a wireless Internet module receiving, processing and outputting an Internet signal;
a cable Internet module receiving, processing and outputting the Internet signal;
an external device interface circuit receiving, processing and outputting an external device signal transmitted from an external device;
a TV main chip (31) receiving a TV signal, the Internet signal and the external device signal, processing the signals and then outputting a video signal and an audio signal; and
a micro control processor (37) receiving a command signal to turn on the TV main chip (31) and drive the TV main chip (31) to execute a related command;
wherein the micro control processor (37) is capable of controlling the wireless Internet module, the cable Internet module and the external device interface circuit directly to receive, process and output the Internet signal and the external device signal without turning on the TV main chip (31).

11. The Internet protocol television of claim 10, wherein the wireless Internet module comprises a wireless fidelity (Wi-Fi) module (35), the cable Internet module comprises a RJ45 module (34), and the external device comprises a 3G wireless network card.

12. The Internet protocol television of claim 11, wherein the micro control processor (37) controls the Wi-Fi module (35) to be a Wi-Fi router directly without turning on the TV main chip (31), and controls the 3G wireless network card or the RJ45 module (34) directly through the external device interface circuit to perform routing a plurality of Wi-Fi signals and conversion between the Wi-Fi signals and a 3G signal.

13. The Internet protocol television of claim 10, wherein the external device interfaces circuit is a universal serial bus (USB) interface (36) circuit.

14. The Internet protocol television of claim 10, wherein the command signal is received through an infrared transmission.

15. The Internet protocol television of claim 14, wherein the command signal is generated by an infrared (IR) remote control.

16. The Internet protocol television of claim 10, further comprising a TV signal receiving interface (33) circuit receiving, processing and outputting the TV signal.

17. The Internet protocol television of claim 16, wherein the TV signal receiving interface (33) circuit receives and processes a radio frequency (RF) signal, a composite video blanking sync (CVBS) signal, a YPbPr signal, a high-definition multimedia interface (HDMI) signal or a video graphics array (VGA) signal.

18. The Internet protocol television of claim 10, further comprising a display device (38) receiving the video signal from the TV main chip (31) to display an image.

19. The Internet protocol television of claim 10, further comprising an audio device (39) for receiving the audio signal from the TV main chip (31) to produce a sound effect.
